# NOUVEAU FASCICULE DE BREVET EUROPEEN

(11) **EP 1 436 081 B2**
(45) Date de publication et mention de la décision concernant l'opposition: **28.04.2010**
(45) Mention de la délivrance du brevet: 03.05.2006
(21) Numéro de dépôt: 02785532.9
(22) Date de dépôt: 08.10.2002
(51) Int. Cl.: B01J 27/053, B01D 53/86, C01B 17/50

(54) **UTILISATION D'UNE COMPOSITION A BASE DE TIO2 COMME CATALYSEUR POUR REALISER L'HYDROLYSE DES COS ET/OU D'HCN**
VERWENDUNG EINER AUF TIO2 BASIERTEN ZUSAMMENSETZUNG ALS KATALYSATOR ZUR HYDROLYSE VON COS UND/ODER HCN
USE OF A TIO2 COMPOSITION AS CATALYST FOR HYDROLYZING COS AND/OR HCN

(30) Priorité: 09.10.2001 FR 0112987
(43) Date de publication de la demande: 14.07.2004
(73) Titulaire: AXENS, 92500 Rueil Malmaison (FR)
(72) Inventeur: NEDEZ, Christophe, F-30340 Salindres (FR); RAY, Jean-Louis, F-92220 Neuilly-sur Seine (FR)
(74) Mandataire: Boulinguiez, Didier
(86) Numéro de dépôt international: PCT/FR2002/003427
(87) Numéro de publication internationale: WO 2003/031058

(56) Documents cités:
- EP-A- 0 060 741
- EP-A- 0 060 742
- EP-A- 0 207 957
- EP-A- 0 514 682
- EP-A- 0 757 969
- WO-A-83/02068
- DE-A- 3 736 478
- US-A- 4 422 958
- US-A- 5 466 427
- US-A- 5 993 763
- The Integrated Gasification Combined Cycle Process:COS and HCN Removal with CRS 31 ; Sulphur 2001-Marrakech 14-17 Octobre 2001- J.L. RAY
- React. Kinet. Catal. Lett. 1995, vol. 55, N°2, pages 501-511
- The hydrolysis of carbonyl sulfide, carbon, disulfide and hydrogen cyanide on Tilania catalysis ; Thesis by M. Huisman 24.10.1994

## Description

EP-A-0 060 741 décrit un catalyseur et procédé pour le traitement des gaz résiduaires industriels contenant des composés de soufre.

L'invention concerne le domaine des catalyseurs. Plus précisément, elle concerne l'utilisation de catalyseurs destinés à favoriser les réactions d'hydrolyse de l'oxysulfure de carbone (COS) et de l'acide cyanhydrique (HCN) dans des mélanges gazeux, émis notamment dans les installations de cogénération.

On rappelle que la cogénération est une technique de production simultanée d'électricité et d'énergie thermique utile (sous forme de vapeur d'eau ou de gaz de combustion) à partir d'un combustible tel que du gaz naturel, du bois, etc. Ce domaine est en continuelle croissance. La plupart des unités de cogénération sont utilisées sur des installations de production d'électricité.

Les gaz issus d'une installation de cogénération doivent répondre à des spécifications bien particulières, liées aux exigences des procédés placés en aval. Le COS et/ou l'HCN sont ainsi des constituants souvent rencontrés qu'il est nécessaire d'éliminer efficacement, par exemple par voie catalytique.

Lors de ces transformations, il ne faut pas, cependant, déplacer le problème en subissant des réactions secondaires parasites. La réaction dite de « shift conversion » du CO :
CO+H₂O Δ CO₂+H₂ (1)
doit, en particulier, être évitée, car elle présente le handicap majeur d'amoindrir le pouvoir calorifique du gaz de synthèse du fait d'une hausse induite de la concentration du CO₂ en présence. Un autre défaut de cette réaction (1) réside dans son caractère exothermique, qui conduit dès lors à une hausse de la température du milieu.

Par ailleurs, le catalyseur mis en oeuvre pour l'élimination du COS et/ou de l'HCN doit, avantageusement, ne pas conduire à la formation d'acide formique (HCOOH) qui viendrait contaminer les gaz en présence et causerait également un vieillissement accéléré du catalyseur, donc réduirait son efficacité et sa durée de vie.

D'autres réactions parasites pareillement à éviter sont celles conduisant à la formation de mercaptans (2), mais aussi de COS à partir d'H₂S (3).
CO + H₂S + 2 H₂ → CH₃SH + H₂O (2)
CO + H₂S → COS + H₂ (3)

Dans le cas spécifique de la mise en oeuvre de résidus pétroliers lourds, des traces de métaux carbonyles tels que Fe(CO)₅ ou Ni(CO)₄ sont rencontrées. Un catalyseur efficace d'hydrolyse du COS et de l'HCN doit préférentiellement se montrer inerte vis-à-vis de ces complexes organométalliques, afin de ne pas être empoisonné au cours de son utilisation dans ce type de circonstances.

Un catalyseur d'hydrolyse du COS et de l'HCN doit également conserver au mieux ses qualités en présence d'ammoniac et d'acide chlorhydrique, qui peuvent également se rencontrer dans les gaz à traiter.

Il faut enfin veiller à ce que le catalyseur à mettre en jeu ne présente pas lui-même de toxicité jour la santé humaine et pour l'environnement.

Les gaz à traiter comprennent des concentrations exprimées en volume en H₂, CO, H₂S et H₂O respectivement incluses entre 10 et 40%, entre 15 et 70%, entre 200 ppm et 3%, et entre 0,5 et 25%. La teneur en COS est habituellement comprise entre 20 et 3000 ppm, celle en HCN peut atteindre 1000 ppm. Des concentrations respectives en NH₃ et HCl comprises entre 0 et 2% et entre 0 et 500 ppm ont été rencontrées. L'ensemble des concentrations qui ont été citées et seront citées par la suite sont exprimées en volume. Les conversions de COS et HCN sont, en général, à assurer à une température comprise entre 100 et 280°C et sous une pression pouvant aller au-delà de 60 bars.

Différents catalyseurs d'hydrolyse du COS ou de l'HCN sont rencontrés dans la littérature. On connaît ainsi des formulations de type K/alumine, CoMo/alumine, NiMo/alumine, Cr/TiO₂. Ils présentent cependant en général des performances médiocres dans le cas d'une hydrolyse conjointe du COS et de l'HCN, et donnent lieu à un niveau élevé de shift conversion du CO. Les catalyseurs à base d'alumine induisent également des réactions de formation d'acide formique, voire de mercaptans. Sur l'ensemble des catalyseurs de l'art antérieur, des décompositions de métaux carbonyles sont également observées. Enfin, certains de ces catalyseurs, par exemple ceux qui sont dopés au chrome, posent des problèmes aigus vis-à-vis de la santé humaine ainsi que de l'environnement.

Le but de l'invention est de proposer des catalyseurs d'hydrolyse du COS et de l'HCN utilisables dans des installations de cogénération, présentant une très bonne efficacité et étant exempts des inconvénients précités.

A cet effet, l'invention a pour objet une utilisation, définie dans la revendication 1, d'une composition à base de TiO₂ comme catalyseur pour réaliser l'hydrolyse de COS et/ou d'HCN dans un mélange gazeux, ladite composition renfermant au moins 5%, d'au moins un sulfate d'un métal alcalino-terreux choisi parmi le calcium, le baryum, le strontium et le magnesium. Des caractéristiques optionnelles de l'invention sont décrites dans les libellés des revendications dépendentes 2 à 6.

Cette composition comprend au moins 60% en poids de TiO₂.

Ledit sulfate est préférentiellement du sulfate de calcium.

De préférence la composition renferme également au moins un composé choisi parmi les argiles, les silicates, le sulfate de titane, les fibres céramiques à une teneur totale inférieure ou égale à 30% en poids, de préférence comprise entre 0,5 et 15%.

Cette composition renferme au moins 60% en poids de TiO₂, au moins 0,1% en poids et au plus 20% en poids, avantageusement au plus 15%, préférentiellement au plus 10%, d'un composé dopant ou d'une combinaison de composés dopants choisis parmi les composés de fer, de vanadium, de cobalt, de nickel, de cuivre, de molybdène et de tungstène.

Le ou les composés dopants sont préférentiellement des oxydes.

Préférentiellement, ce catalyseur a été mis en forme par extrusion.

Sa section transversale peut être alors comprise, par exemple, entre 0,5 et 8mm, préférentiellement entre 0,8 et 5mm.

Dans une application privilégiée de l'invention, le mélange gazeux est issu d'une installation de cogénération.

Comme on l'aura compris, l'invention consiste en l'utilisation d'une composition à base d'oxyde de titane et contenant au moins un sulfate de métal alcalino-terreux, voire également d'autres composés, comme catalyseur pour assister les réactions d'hydrolyse de COS et HCN, en particulier dans une installation de cogénération. Simultanément, les autres réactions parasites de formation d'acide formique, de génération de mercaptans et de décomposition de métaux carbonyles sont avantageusement limitées par rapport à ce qui est observé avec l'ensemble des catalyseurs de l'art antérieur dans ce type d'application.

Selon l'invention, un premier composant principal du produit utilisable comme catalyseur est de l'oxyde de titane TiO₂. L'autre composant principal est un sulfate d'un métal alcalino-terreux, choisi parmi le groupe constitué par le calcium, le baryum, le strontium et le magnésium. La fonction de ce sulfate est de permettre de parvenir au meilleur compromis entre les conversions désirées et la minimisation des réactions parasites.

L'oxyde de titane représente au moins 60% en poids de la composition.

Le sulfate d'alcalino-terreux préférentiellement utilisé est le sulfate de calcium.

La teneur minimale de la composition en sulfate d'alcalino-terreux est de 5% en poids.

En plus de l'oxyde de titane et du sulfate d'alcalino-terreux, la composition peut aussi renfermer au moins un composé choisi parmi les argiles, les silicates, le sulfate de titane, les fibres céramiques. La teneur totale de ce ou ces composés n'excède pas 30% en poids, et est de préférence comprise entre 0,5 et 15%.

La composition utilisée selon l'invention renferme :
- au moins 60% en poids d'oxyde de titane;
- au moins 5% en poids de sulfate d'alcalino-terreux ;
- au moins 0,1% et au plus 20% en poids, avantageusement au plus 15%, et préférentiellement au plus 10% d'un composé dopant ou d'une combinaison de composés dopants choisis parmi des composés de fer, de vanadium, de cobalt, de nickel, de cuivre, de molybdène et de tungstène, par exemple sous forme d'oxydes.

Cet apport de dopant(s) peut être effectué à l'occasion de la mise en forme de l'oxyde de titane et du sulfate d'alcalino-terreux, ou postérieurement à cette opération. Dans cette dernière hypothèse, une imprégnation à sec d'une ou plusieurs solutions de sels métalliques est préférée, la préparation s'achevant conventionnellement par une opération thermique.

Le catalyseur peut se présenter sous toute forme connue : poudre, billes, extrudés, monolithes, matériau concassé, etc. La forme préférée de l'invention est l'extrudé, qu'il soit cylindrique ou polylobé. Dans le cas d'une mise en forme par malaxage suivi d'une extrusion, la section transversale de l'extrudé est avantageusement comprise entre 0,5 et 8 mm, de préférence comprise entre 0,8 et 5 mm.

On va à présent décrire différents exemples de compositions utilisables dans l'invention, leurs procédés de préparation et leurs propriétés dans le cas de l'utilisation envisagée, à savoir comme catalyseur pour la réalisation d'une hydrolyse de COS et HCN, dans des mélanges gazeux à base de CO et H₂ renfermant typiquement de la vapeur d'eau, du COS, de l'H₂S, et éventuellement de l'HCN, du NH₃ et de l'HCl.

On a fabriqué deux catalyseurs de compositions conformes à l'invention, dénommés B et C, par le procédé suivant.

A une suspension d'oxyde de titane obtenue par hydrolyse et filtration dans le procédé classique d'attaque sulfurique de l'ilménite, une suspension de chaux est ajoutée afin de neutraliser l'ensemble des sulfates présents. Ceci fait, la suspension est séchée à 150°C durant une heure. La poudre est alors malaxée en présence d'eau et d'acide nitrique. La pâte générée est extrudée au travers d'une filière pour obtenir des extrudés ayant une forme cylindrique. Après séchage à 120°C et calcination à 450°C, les extrudés présentent un diamètre de 3,5mm, une surface spécifique de 116 m²/g pour un volume poreux total de 36ml/100g. Le taux de TiO₂ est de 88% pour une teneur en CaSO₄ de 11%, la perte au feu complétant le bilan à 100%. Ce catalyseur comparatif est dénommé A.

La catalyseur B résulte d'une imprégnation à sec d'une solution aqueuse de nitrate de nickel sur A, suivie d'un séchage à 120°C et d'une calcination à 350°C. B affiche alors un taux massique de nickel (exprimé en NiO) de 2,1%.

Le catalyseur C résulte d'une imprégnation à sec d'une solution aqueuse de nitrate de cuivre sur A, suivie d'un séchage à 120°C et d'une calcination à 350°C. C affiche alors un taux massique de cuivre (exprimé en CuO) de 4%.

Parallèlement à cela, on a sélectionné trois catalyseurs dénommés D, E et F appartenant à l'art antérieur et se présentant sous forme d'extrudés cylindriques. D est un catalyseur à base d'oxyde de titane et dopé à l'oxyde de chrome, mais ne renfermant pas de sulfates. E et F sont des catalyseurs à base d'alumine.

Les compositions et surfaces spécifiques des catalyseurs A à F sont regroupées dans le tableau 1.

**Tableau I. Caractéristiques des catalyseurs étudiés**

| Catalyseur | A | B | C | D | E | F |
|---|---|---|---|---|---|---|
| Ti0₂(%) | 88,0 | 86,2 | 84,5 | 90,0 | - | - |
| Al₂O₃(%) | - | - | - | - | 80 | 80 |
| CaSO₄(%) | 11,0 | 10,8 | 10,6 | - | - | - |
| NiO(%) | - | 2,1 | - | - | - | 3,1 |
| CuO(%) | - | - | 4,0 | - | - | - |
| CoO(%) | - | - | - | - | 3,4 | - |
| MoO₃(%) | - | - | - | - | 14,2 | 14,5 |
| Cr₂O₃(%) | - | - | - | 6,2 | - | - |
| Surface | 116 | 105 | 101 | 72 | 177 | 191 |
| spécifique (m²/g) | | | | | | |
| Diamètre (mm) | 3,5 | 3,5 | 3,5 | 3,5 | 1,6 | 1,6 |

On a ensuite étudié les résultats procurés par ces divers catalyseurs lors du traitement de gaz ayant la composition suivante, représentative de celle que l'on peut retrouver pour les gaz issus d'une installation de cogénération (tous les pourcentages sont ici donnés en volume) :
- de 30 à 40% pour CO et H₂ ;
- de 2 à 18% pour H₂O
- de 0 à 2000 ppm pour COS, avec une concentration en H₂S environ décuple de celle du COS mais jamais inférieure à 2000 ppm;
- de 0 à 500 ppm pour HCN ;
- de 0 à 1000 ppm pour NH₃ ;
- de 0 à 150 ppm pour HCl.

La température de ces gaz a été fixée entre 180 et 280°C, et leur pression entre 1 et 10 bars. La vitesse spatiale (VVh, c'est à dire le rapport entre le poids de charge traité par unité de temps au poids de catalyseur utilisé) a été fixée entre 2950 et 5900h⁻¹.

### Exemple 1

Une première série d'expériences a été menée en l'absence d'HCN, mais également de NH₃ et d'HCl, la concentration en COS en entrée de réacteur étant de 2000 ppm.

Lorsque la température est de 220°C, la pression de 1 bar et la teneur en eau en entrée de réacteur de 8%, pour une VVh de 5900 h⁻¹, les conversions du COS obtenues respectivement par les catalyseurs A, B, C, D, E et F sont de 95,5, 97,5, 96,2, 78,5, 56,6 et 57,4%.

Lorsque la température est de 210°C, la pression de 1 bar et la teneur en eau en entrée de réacteur de 18%, pour une Wh de 5900 h⁻¹, les conversions du COS obtenues respectivement par les catalyseurs A, D et E sont de 98,2, 72,4 et 52,1 %.

### Exemple 2

Une deuxième série d'expériences a été conduite en présence de 500 ppm d'HCN, mais en l'absence de NH₃ et d'HCl, la concentration en COS en entrée de réacteur étant de 2000 ppm.

Lorsque la température est de 220°C, la pression de 1 bar et la teneur en eau en entrée de réacteur de 8%, pour une VVh de 5900 h⁻¹, les conversions du COS obtenues respectivement par les catalyseurs A, B, C, D, E et F sont de 85,8, 90,5, 90,2, 68,5, 40,2 et 41,8%. Simultanément, les conversions d'HCN obtenues par les mêmes catalyseurs sont respectivement de 95,5, 98,2, 97,1, 96,0, 85,2 et 81,3%. Dans le même temps, la production parasite de CO₂, via une shift conversion du CO, est en volume respectivement de 0,15, 0,2, 0,2, 1,1, 1,4 et 2,3%, l'augmentation de température subie étant inférieure à 1 °C pour les catalyseurs A, B et C, mais de 7, 10 et 15°C pour les catalyseurs D, E et F. De plus, 10, 6 et 15% de l'HCN transformé est en fait hydrogéné en CH₄ avec respectivement D, E et F, là où moins de 1 % l'est avec A, B et C.

Lorsque la température est de 220°C, la pression de 1 bar et la teneur en eau en entrée de réacteur de 15%, pour une VVh de 5900 h⁻¹, les conversions du COS obtenues respectivement par les catalyseurs A, D, E et F sont de 94,0, 78,4, 50,4 et 48,7%. Alors, les conversions d'HCN obtenues respectivement par les quatre mêmes catalyseurs sont de 95,7, 95,5, 88,6 et 84,9%. Dans le même temps, la production parasite de CO₂, via une shift conversion du CO, est en volume de 0,15, 0,7, 3,3 et 3,1%, l'augmentation de température subie étant inférieure à 1 °C pour le catalyseur A, mais de 5, 17 et 17°C pour les catalyseurs D, E et F. La même remarque sur la formation de méthane que celle formulée dans l'exemple 1 est valable pour cet exemple.

Lorsque la température est de 180°C, la pression de 10 bar et la teneur en eau en entrée de réacteur de 6% pour une VVh de 2950 h⁻¹, les conversions du COS obtenues respectivement par les catalyseurs A et B sont de 94,6 et 97,1 %. Simultanément, les conversions d'HCN obtenues respectivement par les deux mêmes catalyseurs sont de 90,8 et 93,7%. Aucune formation significative parasite de CO₂, de CH₄, ni aucune élévation spéciale de température n'est alors constatée.

### Exemple 3 comparatif

Une troisième série d'expériences a été conduite en présence de 500 ppm d'HCN et de 2000 ppm de NH₃, la concentration du COS en entrée de réacteur étant de 2000 ppm.

Lorsque la température est de 220°C, la pression de 1 bar et la teneur en eau en entrée de réacteur de 15%, pour une Wh de 5900 h⁻¹, les conversions du COS obtenues respectivement par les catalyseurs A, D et E sont de 94,1, 74,4 et 41,4%. Simultanément les conversions d'HCN obtenues respectivement par les trois mêmes catalyseurs sont de 95,8, 91,5 et 78,4%.

### Exemple 4 comparatif

Une quatrième série d'expériences a été conduite en présence de 500 ppm d'HCN et de 150 ppm d'HCl, la concentration en entrée de réacteur de COS étant de 2000 ppm.

Lorsque la température est de 220°C, la pression de 1 bar et la teneur en entrée en eau de 8%, pour une Wh de 5900 h⁻¹, les conversions du COS obtenues respectivement par les catalyseurs A, D et E sont de 70,6, 58,4 et 25,9%. Alors, les conversions d'HCN obtenues respectivement par les trois mêmes catalyseurs sont de 90,5, 51,0 et 30,7%. Lorsque l'alimentation du réacteur en HCI est coupée, le reste des conditions demeurant inchangé, la performance de A pour l'hydrolyse du COS revient progressivement à la normale, au contraire de celle de D qui ne récupère qu'imparfaitement son niveau initial, E ayant quant à lui visiblement été définitivement endommagé.

A partir des observations ici faites, on constate que les catalyseurs selon l'invention présentent un compromis optimal entre des conversions très élevées du COS et de l'HCN, une insensibilité à la présence de NH₃, une résistance et une réversibilité à l'exposition à l'HCl pour la conversion du COS (celle de l'HCN n'étant de toute façon pas affectée par l'HCl), ainsi qu'une limitation remarquable des formations de CO₂ et de CH₄.

Les catalyseurs selon l'art antérieur présentent, en revanche, des niveaux de conversion sensiblement plus faibles pour le COS et, le plus souvent, pour l'HCN, et entraînent tous la formation de composés indésirés, ainsi qu'une exothermie parasite accrue. Par ailleurs, une exposition à des sous-produits pouvant être conventionnellement rencontrés (NH₃, HCl) se passe difficilement, voire cause des dommages graves à la performance catalytique.

## Revendications

1. Utilisation d'une composition à base de TiO₂ comme catalyseur pour réaliser l'hydrolyse de COS et/ou d'HCN dans un mélange gazeux, issu d'une installation de cogénération et comprenant des concentrations exprimées en volume en H₂, CO, H₂S et H₂O respectivement incluses entre 10 et 40 %, entre 15 et 70 %, entre 200 ppm et 3% et entre 0,5 et 25%, ladite composition renfermant au moins 60% en poids de TiO₂, au moins 5% en poids d'au moins un sulfate d'un métal alcalino-terreux choisi parmi le calcium, le baryum, le strontium et le magnésium, au moins 0,1 % en poids et au plus 20 % en poids, avantageusement au plus 15 %, préférentiellement au plus 10 %, d'un composé dopant ou d'une combinaison de composés dopants choisis parmi les composés de fer, de vanadium, de cobalt, de nickel, de cuivre, de molybdène et de tungstène.

2. Utilisation selon la revendication 1, **caractérisée en ce que** ledit sulfate est du sulfate de calcium.

3. Utilisation selon l'une ou l'autre des revendications 1 ou 2, **caractérisée en ce que** la composition renferme également au moins un composé choisi parmi les argiles, les silicates, le sulfate de titane, les fibres céramiques à une teneur totale inférieure ou égale à 30 % en poids, de préférence comprise entre 0,5 et 15 %.

4. Utilisation selon l'une des revendications 1 à 3, **caractérisée en ce que** le ou les composés dopants sont des oxydes.

5. Utilisation selon l'une des revendications 1 à 4, **caractérisée en ce que** le catalyseur a été mis en forme par extrusion.

6. Utilisation selon la revendication 5, **caractérisée en ce que** la section transversale du catalyseur est comprise entre 0,5 et 8 mm, préférentiellement entre 0,8 et 5 mm.

## Claims

1. Use of a composition based on TiO₂ as a catalyst for hydrolyzing COS and/or HCN in a gas mixture derived from a co-generation installation, having concentration (in vol) of H₂, CO, H₂S and H₂O in the range 10% to 40%, 15% to 70%, 200 ppm to 3% and 0.5% to 25% respectively, said composition comprising comprises at least 60% by weight of TiO2, at least 5% by weight of at least one sulphate of an alkaline-earth metal selected from calcium, barium, strontium and magnesium, at least 0.1% by weight and at most 20% by weight, advantageously at most 15%, preferably at most 10%, of a doping compound or a combination of doping compounds selected from compounds of iron, vanadium, cobalt, nickel, copper, molybdenum and tungsten.

2. Use according to claim 1, **characterized in that** said sulphate is calcium sulphate.

3. Use according to any of claim 1 or 2, **characterized in that** the composition also comprises at least one compound selected from clays, silicates, titanium sulphate and ceramic fibres in a total content of 30% by weight or less, preferably in the range 0.5% to 15%.

4. Use according to one of claims 1 to 3, **characterized in that** the doping compound or compounds is/are oxides.

5. Use according to one of claims 1 to 4, **characterized in that** the catalyst has been formed by extrusion.

6. Use according to claim 5, **characterized in that** the transverse section of the catalyst is in the range 0.5 to 8 mm, preferably in the range 0.8 to 5 mm.

## Patentansprüche

1. Verwendung einer auf TiO₂ basierten Zusammensetzung als Katalysator zur Durchführung der Hydrolyse von COS und/oder HCN in gasförmiger Mischung, abgeleitet aus einer Anlage zur gleichzeitigen Erzeugung und umfassend in Volumen angegebene H₂, CO, H₂S bzw. H₂O Konzentrationen zwischen 10 und 40%, zwischen 15 und 70%, zwischen 200 ppm und 3% und zwischen 0,5 und 25%, wobei die besagte Zusammensetzung mindestens 60 Gewichtsprozent TiO₂, mindestens 5 Gewichts-% mindestens eines Sulfats eines erdalkalischen Metalls ausgewählt aus Kalzium, Barium, Strontium und Magnesium umfasst, mindestens 0,1 Gewichtsprozent und höchstens 20 Gewichts-%, vorteilhafter Weise höchstens 15 Gewichts-%, bevorzugt höchstens 10%, einer Dotierverbindung oder einer Kombination von Dotierverbindungen umschließt, welche aus Verbindungen aus Elsen, Vanadium, Kobalt, Nickel, Kupfer, Molybdän und Wolfram ausgewählt sind.

2. Verwendung nach dem Anspruch 1, **dadurch gekennzeichnet, dass** das besagte Sulfat Kalziumsulfat ist.

3. Verwendung nach einem dem Anspruch 1 oder 2, **dadurch gekennzeichnet, dass** die Zusammensetzung gleichermaßen mindestens eine Verbindung gewählt aus Tonerden, Silikate, Titansulfaten, Keramikfasern mit einem Gesamtgehalt unterhalb oder gleich 30 Gewichts-%, vorzugsweise im Intervall 0,5 bis 15% enthalten, umschließt.

4. Verwendung nach einem der Ansprüche 1 - 3, **dadurch gekennzeichnet, dass** die Dotierverbindung oder die Dotierverbindungen Oxide sind.

5. Verwendung nach einem der Ansprüche 1 - 4, **dadurch gekennzeichnet, dass** der Katalysator mittels Strangpressen aufbereitet worden ist.

6. Verwendung nach dem Anspruch 5, **dadurch gekennzeichnet, dass** der Querschnitt des Katalysators zwischen 0,5 und 8 mm, bevorzugt zwischen 0,8 und 5 mm, liegt.
